Europäisches Patentamt

European Patent Office

Office européen des brevets

Veröffentlichungsnummer: **0 284 772**
**A2**

## EUROPÄISCHE PATENTANMELDUNG

Anmeldenummer: 88102667.8

Int. Cl.⁴ **F16J 15/32**

Anmeldetag: 24.02.88

Priorität: 28.03.87 DE 3710403

Veröffentlichungstag der Anmeldung:
05.10.88 Patentblatt 88/40

Benannte Vertragsstaaten:
**BE DE FR GB IT LU NL SE**

Anmelder: **Elring Dichtungswerke GmbH**
**Höhenstrasse 24**
**D-7012 Fellbach(DE)**

Erfinder: **Haldenwang, Rolf**
**Mühlstrasse 30**
**D-7121 Erligheim(DE)**
Erfinder: **Schuhmacher, Walter**
**Lindenstrasse 55**
**D-7120 Bietigheim-Bissingen(DE)**

Vertreter: **Hoeger, Stellrecht & Partner**
**Uhlandstrasse 14c**
**D-7000 Stuttgart 1(DE)**

### Komplettkolben.

Ein Komplettkolben, insbesondere zur doppelseitigen Druckbeaufschlagung durch pneumatische Medien weist einen an einer Kolbenstange anmontierbaren Einspannflansch und einen am Einspannflansch befestigten Abdichtteil auf, der mit wenigstens einer Dichtlippe an der Innenwand eines den Kolben verschieblich aufnehmenden Zylinders abdichtend anliegt. Der Abdichtteil ist aus hochverschleißfestem, trockenlauffähigem Polytetrafluoräthylen-Werkstoff mit niedrigem Reibkoeffizienten geformt und mit einem Einspannflansch aus duroplastischem Werkstoff fest verbunden.

FIG. 1

Xerox Copy Centre

EP 0 284 772 A2

## Komplettkolben

Die Erfindung betrifft einen Komplettkolben, insbesondere zur doppelseitigen Druckbeaufschlagung durch pneumatische Medien mit einem an einer Kolbenstange anmontierbaren Einspannflansch und mit einem am Einspannflansch befestigten Abdichtteil, der mit wenigstens einer Dichtlippe an der Innenwand eines den Kolben verschieblich aufnehmenden Zylinders abdichtend anliegt.

Bei bekannten Komplettkolben dieser Art bestehen die Einspannflansche aus Metall, beispielsweise Stahl oder Aluminium. Der Abdichtteil wird aus gummielastischem Werkstoff gefertigt und am Einspannflansch anvulkanisiert.

Für den Einsatz eines derartigen Komplettkolbens ist eine Schmierung erforderlich, beispielsweise in Form einer einmaligen Schmierung mit Fett oder Öl oder eine Schmierung dadurch, daß der Kolben mit geölter Druckluft oder dergleichen beaufschlagt wird. Ein Trockenlauf, d.h. ein Betrieb ohne Schmierung, ist mit diesem Kolben nicht möglich. Da bei den gummielastischen Werkstoffen der statische Reibungskoeffizient über dem dynamischen Reibungskoeffizienten liegt, treten im Betrieb des Kolbens aufgrund des sogenannten "Stick-Slip-Effekts" störende Reibschwingungen auf. Trotz Schmierung ist das Reibverhalten der bekannten Komplettkolben ungünstig, wodurch sich generell ein unbefriedigender Wirkungsgrad eines mit einem solchen Kolben ausgerüsteten Pneumatik-Zylinders oder dergleichen ergibt. Es sind nämlich höhere Verschiebekräfte erforderlich, die auftretende, hohe Friktionswärme beeinträchtigt die Funktion, die Lebensdauer des Kolbens ist gering und es tritt eine höhere Leckage auf. Der aus Metall bestehende Einspannflansch erhöht naturgemäß das Kolbengewicht, was wiederum hohe Massenkräfte im Betrieb bedingt. Damit - schließlich der erforderliche Schmierfilm durch die Dichtlippen des Abdichtteils von der Zylinderinnenwand nicht abgeschert wird, müssen die Dichtkanten abgerundet oder angeschrägt werden. Hierdurch werden die Abdichtung und der Wirkungsgrad weiterhin verschlechtert.

Es ist Aufgabe der Erfindung, unter weitgehender Behebung der geschilderten Mängel einen gattungsgemäßen Komplettkolben so zu verbessern, daß er ohne Einbuße an Dichtwirkung auch für einen lang dauernden Trockenlauf geeignet ist, ein geringes Gewicht besitzt und dennoch in relativ einfacher Weise hergestellt werden kann.

Die Aufgabe wird erfindungsgemäß dadurch gelöst, daß bei einem gattungsgemäßen Komplettkolben der Abdichtteil aus hochverschleißfestem, trockenlauffähigem Polytetrafluoräthylen-Werkstoff mit niedrigem Reibkoeffizienten geformt und mit einem Einspannflansch aus duroplastischem Kunststoff fest verbunden ist.

Die nachstehende Beschreibung bevorzugter Ausführungsformen dient im Zusammenhang mit beiliegender Zeichnung der weiteren Erläuterung der Erfindung. Es zeigen:

Fig. 1 schematisch den Aufbau eines Komplettkolbens;

Fig. 2 und 3 Ausführungsformen von Komplettkolben mit zwei Dichtlippen;

Fig. 4 und 5 Komplettkolben mit einer Dichtlippe und

Fig. 6 bis 10 Komplettkolben mit einem formschlüssig an einem Einspannflansch verankerten Abdichtteil.

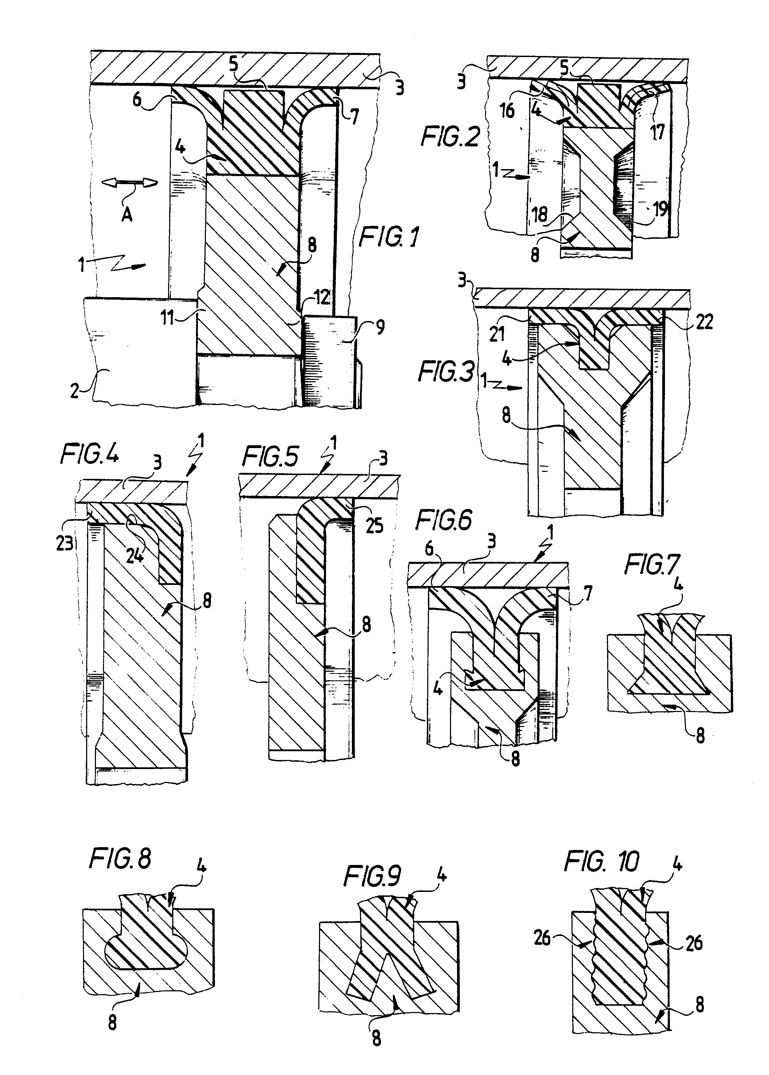

In Fig. 1 ist ein Komplettkolben 1 mit einer Kolbenstange 2 fest verbunden und im Inneren eines Zylinders 3 in Pfeilrichtung A hin-und herverschieblich. Der Kolben umfaßt ein Abdichtteil 4 mit Kolbenführungsfläche 5 und zwei Dichtlippen 6, 7 die an der Innenseite des Zylinders 3 abdichtend anliegen. Der ringförmige Abdichtteil ist innen fest mit einem ebenfalls ringförmigen Einspannflansch 8 fest verbunden, der auf einen entsprechend verjüngten Abschnitt der Kolbenstange 2 aufgeschoben und mit einer Befestigungsmutter 9 festgehalten ist. Beidseitige Verstärkungen des Einspannflansches 8 im Bereich seines inneren Durchmessers bilden Dichtstege 11, 12 zur statischen Abdichtung des Komplettkolbens 1 gegenüber der Kolbenstange 2.

Der einstückige Abdichtteil 4 ist erfindungsgemäß aus einem Polytetrafluoräthylen (PTFE)-Werkstoff oder aus einem anderen hochverschleißfesten, trockenlauffähigen Material mit niedrigem Reibkoeffizienten gefertigt, wobei die Dichtlippen (6, 7) mit dem die Kolbenführungsfläche 5 tragenden Abschnitt einstückig sind. An PTFE-Werkstoffen kommen in erster Linie sogenannte "Compounds" in Frage, die außer PTFE Zusätze an Kohle, Graphit, Glasfasern, Bronze und dergleichen enthalten können.

Bei der Herstellung des ringförmigen Abdichtteils 4 geht man zunächst von einem rechteckigen Querschnitt aus, dreht zwischen den beiden zunächst geradlinig verlaufenden Dichtlippen 6, 7 bis zur Führungsfläche 5 ab, nimmt zwei die Dichtlippen 6, 7 begrenzende Einstiche vor und biegt anschließend die Dichtlippen 6, 7 in der aus Fig. 1 ersichtlichen Weise seitlich ab, so daß sie eine gekrümmte Form annehmen und sich an die Zylinderinnenwand anschmiegen.

Vor dem Abbiegen der Dichtlippe 6, 7 wird das Abdichtelement 4 erwärmt und danach abgekühlt.

Hierdurch erhalten die Dichtlippen 6, 7 einen sogenannten "Memory-Effekt", d.h. sie sind bestrebt, sich in ihre ursprüngliche, geradlinige Form zurückzuorientieren. Hierdurch wird das Anlegen der Dichtlippen 6, 7 am Zylinder verbessert und die Dichtwirkung erhöht. Falls erforderlich, können an oder in dem Abdichtelement auch gesonderte Federn aus Metall vorgesehen werden, welche die Anpreßkraft zusätzlich erhöhen.

Der Einspannflansch 8 besteht erfindungsgemäß aus einem duroplastischen Kunststoff, beispielsweise aus einem Duroplasten auf Phenolharzbasis, wobei das Harz mit Glasfasern oder anderen Zusatzstoffen versetzt sein kann. Geeignet sind insbesondere mechanische und thermisch hochstabile Duroplasten.

Die feste Verbindung zwischen dem Abdichtteil 4 und dem Einspannflansch 8 erfolgt in der Weise, daß man den Abdichtteil 4 in ein Formwerkzeug einbringt und anschließend den den Einspannflansch bildenden, duroplastischen Werkstoff durch Pressen, Spritzen oder Spritzpressen anformt. Hierzu kann die Innenfläche des Abdichtteils 4, an welche der Duroplast angeformt wird, vorher, z.B. mit in Ammoniak gelöstem Natrium angeätzt werden, um einen stoffschlüssigen Verbund mit dem angeformten Einspannflansch 8 zu erzielen.

Da der den Abdichtteil 4 bildende PTFE-Werkstoff Trockenlaufeigenschaften besitzt und somit kein Schmiermittel benötigt, können die an der Innenseite des Zylinders 3 anliegenden Dichtlippen 6, 7 scharfkantig ausgebildet werden.

Die Krümmung der Dichtlippen 6, 7 mit dem beschriebenen "Memory-Effekt" erfolgt vorzugsweise nach dem Anformen des Einspannflansches 8 an den Abdichtteil 4.

Die Fig. 2 bis 5 zeigen abgewandelte Ausführungsformen von Komplettkolben, die grundsätzlich in der gleichen Weise wirken und in der gleichen Weise hergestellt sind, wie der Komplettkolben gemäß Fig. 1. In Fig. 2 bis 5 sind einander entsprechende Teile mit den gleichen Bezugszeichen wie in Fig. 1 versehen. In Fig. 2 sind die Dichtlippen 16, 17 des Abdichtteils 4 gespalten, so daß sie aufgrund erhöhter Flexibilität dichter an der Innenseite des Zylinders 3 anliegen können. Der Einspannflansch 8 ist aufgrund beidseitiger Ausnehmungen 18, 19 gerippt. In Fig. 3 fehlt eine besondere Kolbenführungsfläche 5 entsprechend Fig. 1 oder 2. Stattdessen sind die Dichtlippen 21, 22 bis zur Anlage an die Außenseite des Einspannflansches 8 umgebogen, so daß sie gleichzeitig eine Kolbenführung und eine Abstützung bilden, die insbesondere für höhere Drücke geeignet ist. Während die Fig. 1 bis 3 doppelseitig wirkende Kolben zeigen, sind in Fig. 4 und 5 einseitig wirkende Kolben schematisch dargestellt, wobei in Fig. 4 eine einfach vorhandene Dichtlippe 23 an einer Abstütz-schulter 24 des Einspannflansches 8 anliegt und in Fig. 5 eine Dichtlippe 25 in entgegengesetzter Richtung umgebogen ist, also am Einspannflansch 8 keine Abstützung findet. Bei sämtlichen Ausführungsformen gemäß Fig. 2 bis 5 wird ebenso wie bei der Ausführungsform gemäß Fig. 1 der Abdichtteil vor Anformung des duroplastischen Einspannflansches 8 an der betreffenden Fläche angeätzt. Besondere Haftvermittler sind dann nicht notwendig.

Bei den Ausführungsformen von Komplettkolben gemäß Fig. 6 bis 10 erfolgt die hochtemperaturfeste Verbindung zwischen Abdichtteil und Einspannflansch durch mechanische Verankerung, und zwar infolge Form-und/oder Kraftschluß.

Wie Fig. 6 zeigt, weist der Abdichtteil 4 an seinem den Dichtlippen 6, 7 abgekehrten Ende schwalbenschwanzförmige Querschnittsform auf. Um dieses Ende wird der duroplastische Kunststoff des Einspannflansches 8 herumgegossen, herumgespritzt oder herumgepreßt. Auch eine Anformung mit Hilfe der Spritzpreßtechnik ist möglich. In jedem Falle entsteht aufgrund von Formschluß und/oder gegebenenfalls Kraftschluß eine mechanische Verankerung des Abdichtteils 4 im Einspannflansch 8. Eine vorherige Anätzung des Abdichtelements 4 ist in diesem Falle vor der Anformung des Einspannflansches 8 nicht erforderlich, kann jedoch im Bedarfsfall zusätzlich angewandt werden.

Die Fig. 7 bis 10 zeigen abgewandelte mechanische Verankerungen des Abdichtteils 4 im Einspannflansch 8, die aus sich heraus verständlich sind. In Fig. 10 weisen die beiden seitlichen Flanken des Abdichtelements 4 jeweils ein Plangewinde 26 auf, um den Formschluß mit dem Einspannflansch 8 zu verbessern.

Abschließend werden die Vorteile der beschriebenen Komplettkolben noch einmal zusammengefaßt:

Die Komplettkolben sind insbesondere für einen Trockenlauf geeignet und ergeben stick-slipfreie Kolbenbewegungen. Ein Einlaufen der Dichtlippen in die Zylinderwandung ist sowohl im geschmierten Lauf als auch im Trockenlauf ausgeschlossen. Aufgrund des den Dichtlippen erteilten "Memory-Effekts" (Rückorientierung) ergibt sich im Dauereinsatz eine konstante Dichtlippenpressung, und zwar auch bei wechselnden Temperaturen; bei Verschleiß stellen sich die Dichtlippen selbst nach und auch bei geringer Druckbeaufschlagung ist die Dichtlippenpressung nicht überhöht, d.h. es treten nur geringe Verschiebekräfte auf. Dicht-und Führungsabschnitte (Führungsfläche 5) des Abdichtteils sind miteinander einstückig. Ein Einsatz des Komplettkolbens auch im Hochtemperaturbereich bis etwa 180°C ist möglich. Die Haftfestigkeit zwischen dem aus PTFE bestehenden Abdichtelement und dem Einspannflansch aus duroplastischem Kunststoff ist hervorragend, auch wenn kein Haftvermittler verwendet ist. Das Kolbengewicht ist wegen des aus Kunststoff gefertigten Einspannflansches 8 erheblich verringert und bedingt kleine Massenkräfte, so daß genauer positioniert werden kann. Durch die mögliche scharfkantige Dichtlippengeometrie wird eine bessere Abdichtwirkung erzielt. Die Lebensdauer des Abdichtelements läßt sich durch die Verwendung hochverschleißfester PTFE-Compounds wesentlich erhöhen. Eine kostengünstige Serienherstellung auf Preß-, Spritz oder Spritzpreßautomaten ist in einfacher Weise möglich.

## Ansprüche

1. Komplettkolben, insbesondere zur doppelseitigen Druckbeaufschlagung durch pneumatische Medien mit einem an eine Kolbenstange anmontierbaen Einspannflansch und mit einem am Einspannflansch befestigten Abdichtteil, der mit wenigstens einer Dichtlippe an der Innenwand eines den Kolben verschieblich aufnehmenden Zylinders abdichtend anliegt,
**dadurch gekennzeichnet,** daß der Abdichtteil (4) aus hochverschleißfestem, trockenlauffähigem Polytetrafluoräthylen-Werkstoff mit niedrigem Reibkoeffizienten geformt und mit einem Einspannflansch (8) aus duroplastischem Kunststoff fest verbunden ist.

2. Kolben nach Anspruch 1, dadurch gekennzeichnet, daß den Dichtlippen (6, 7) des Abdichtteils (4) ein "Memory-Effekt" (Rückorientierung) erteilt ist.

3. Kolben nach Anspruch 1, dadurch gekennzeichnet, daß die Dichtlippen (6, 7) scharfe Dichtkanten aufweisen.

4. Kolben nach Anspruch 1, dadurch gekennzeichnet, daß ein vorgefertigtes Abdichtteil (4) durch Pressen, Spritzen oder Spritzpressen mit dem Einspannflansch (8) verbunden ist.

5. Kolben nach Anspruch 1, dadurch gekennzeichnet, daß der Abdichtteil (4) mechanisch form- und/oder kraftschlüssig im Einspannflansch (5) verankert ist.

6. Kolben nach Anspruch 1, dadurch gekennzeichnet, daß die Dichtlippen (16, 17) gespalten sind.

7. Kolben nach Anspruch 1, dadurch gekennzeichnet, daß die Dichtlippen (21, 22) gleichzeitig der Kolbenführung dienen.

8. Kolben nach Anspruch 1, dadurch gekennzeichnet, daß der Abdichtteil (4) aus Polytetrafluoräthylen-Compounds mit einem Gehalt an Graphit, Kohle, Glasfasern, Bronze und oder anderen Füllstoffen besteht.

9. Kolben nach Anspruch 1, dadurch gekennzeichnet, daß der Einspannflansch (8) aus glasfaserverstärktem Phenolharz besteht.

FIG.1

A

FIG.2

FIG.3

FIG.4

FIG.5

FIG.6

FIG.7

FIG.8

FIG.9

FIG. 10